# EUROPÄISCHE PATENTSCHRIFT

(11) **EP 4 363 684 B1**
(45) Veröffentlichungstag und Bekanntmachung des Hinweises auf die Patenterteilung: **04.06.2025**
(21) Anmeldenummer: 22737895.7
(22) Anmeldetag: 30.06.2022
(51) Int. Cl.: E05F 15/622, F16H 25/20

(54) **SPINDELANTRIEB FÜR EIN VERSCHLUSSELEMENT EINES KRAFTFAHRZEUGS**
SPINDLE DRIVE FOR A CLOSURE ELEMENT OF A MOTOR VEHICLE
ENTRAÎNEMENT DE TIGE D'UN ÉLÉMENT DE FERMETURE D'UN VÉHICULE À MOTEUR

(30) Priorität: 01.07.2021 DE 102021117042
(43) Veröffentlichungstag der Anmeldung: 08.05.2024
(73) Patentinhaber: Brose Fahrzeugteile SE & Co. Kommanditgesellschaft, Bamberg, 96052 Bamberg (DE)
(72) Erfinder: SCHNEIDERBANGER, Michael, 96179 Rattelsdorf (DE); ZWOSTA, Tobias, 96352 Wilhelmsthal (DE); SCHWEIZER, Daniela, 96450 Coburg (DE); SÜSS, Marco, 96047 Bamberg (DE)
(74) Vertreter: Gottschald Patentanwälte Partnerschaft mbB
(86) Internationale Anmeldenummer: PCT/EP2022/068055
(87) Internationale Veröffentlichungsnummer: WO 2023/275240

(56) Entgegenhaltungen:
- DE-A1- 102017 117 993
- DE-A1- 102018 115 774
- DE-A1- 102019 114 175

## Beschreibung

Die vorliegende Erfindung betrifft einen Spindelantrieb für ein Verschlusselement eines Kraftfahrzeugs gemäß dem Oberbegriff von Anspruch 1.

Der in Rede stehende Spindelantrieb kann jedwedem Verschlusselement eines Kraftfahrzeugs zugeordnet sein. Dazu gehören Heckklappen, Heckdeckel, Hecktüren, Seitentüren oder dergleichen. Insoweit ist der Begriff "Verschlusselement" vorliegend weit zu verstehen.

Der bekannte Spindelantrieb (DE 10 2017 117 993 A1), von dem die Erfindung ausgeht, weist den üblichen strukturellen Aufbau mit einem Spindel-Spindelmuttergetriebe auf, wobei außerdem ein Antriebsmotor vorgesehen ist, dem das Spindel-Spindelmuttergetriebe nachgeschaltet ist. Dabei sind ein spindelseitiger Antriebsabschnitt, der die Antriebsspindel des Spindel-Spindelmuttergetriebes und hier auch den Antriebsmotor, dem die Spindel nachgeschaltet ist, aufweist, sowie ein spindelmutterseitiger Antriebsabschnitt, der die Spindelmutter des Spindel-Spindelmuttergetriebes aufweist, vorgesehen. Die beiden Antriebsabschnitte lassen sich, hier motorisch, gegeneinander verstellen und sind zur Kopplung am Kraftfahrzeug und hier zum Ausleiten der resultierenden, linearen Antriebsbewegungen jeweils mit einem Antriebsanschluss verbunden. Der bekannte Spindelantrieb weist ferner ein Spindelantriebsgehäuse mit einem dem spindelmutterseitigen Antriebsabschnitt zugeordneten Innenrohr und einem dem spindelseitigen Antriebsabschnitt zugeordneten Außenrohr auf. Das Außenrohr weist eine bezogen auf die geometrische Spindelachse umlaufende ringförmige Dichtanordnung auf, die während der Durchführung der Antriebsbewegungen an dem Innenrohr entlanggleitet.

Die vorgesehene Dichtanordnung erlaubt eine wirkungsvolle Abdichtung des Innern des Spindelantriebs gegenüber Flüssigkeit, beispielsweise Regen oder Spritzwasser, aus der Umgebung. Es ist dabei jedoch eine Herausforderung, reibungsbedingten Verschleiß der Dichtanordnung und reibungsbedingte Störgeräusche zu reduzieren.

Der Erfindung liegt das Problem zugrunde, den bekannten Spindelantrieb derart auszugestalten und weiterzubilden, dass eine Optimierung der Dichtanordnung hinsichtlich Verschleiß und Geräuschbildung erreicht wird.

Das obige Problem wird durch die Merkmale des kennzeichnenden Teils von Anspruch 1 gelöst.

Wesentlich ist die grundsätzliche Überlegung, die Dichtanordnung während linearer Antriebsbewegungen des Spindelantriebs zwischen seiner eingefahrenen Stellung und seiner ausgefahrenen Stellung teilweise von dem Rohr, an dem diese entlanggleitet, beispielsweise dem Innenrohr, etwas abzuheben, vorzugsweise während des überwiegenden Teils der Relativbewegung des Außenrohrs gegenüber dem Innenrohr. Dadurch wird die bei der Relativbewegung auftretende Reibung zwischen der Dichtanordnung und dem Rohr reduziert. Zu diesem Zweck ist die Dichtanordnung axial in zwei Ringabschnitte unterteilt, von denen einer bei der Relativbewegung durch das Rohr, an dem die Dichtanordnung entlanggeführt wird, beispielsweise das Innenrohr, radial ausgelenkt, beispielsweise aufgespreizt, werden kann, wodurch die radiale Andruckkraft dieses Ringabschnitts bei der Relativbewegung gegenüber derjenigen in der eingefahrenen Stellung verringert werden kann. In der eingefahrenen Stellung wird der Ringabschnitt dagegen nicht ausgelenkt und dichtet besonders wirksam ab.

Es sei hervorgehoben, dass anstelle des Innenrohrs auch das Außenrohr dasjenige Rohr bilden kann, an dem die Dichtanordnung entlanggleitet. Dabei würde entsprechend das Außenrohr den besagten Ringabschnitt bei der obigen Relativbewegung radial nach innen auslenken, beispielsweisen radial verengen, um die radiale Andruckkraft zu verringern. Wenn im Folgenden die Rede von der obigen ersten Variante ist, bei der die Dichtanordnung am Außenrohr fixiert ist und außenseitig am Innenrohr entlanggleitet, gelten die Ausführungen für die letztere Variante, bei der die Dichtanordnung am Innenrohr fixiert ist und innenseitig am Außenrohr entlanggleitet, entsprechend.

Im Einzelnen wird vorgeschlagen, dass die Dichtanordnung einen ersten axialen Ringabschnitt und einen bezogen auf die geometrische Spindelachse axial daran angrenzenden, beweglich, insbesondere schwenkbar, mit dem ersten axialen Ringabschnitt verbundenen zweiten axialen Ringabschnitt aufweist, und dass bei der Durchführung der Antriebsbewegungen der zweite axiale Ringabschnitt gegenüber dem ersten axialen Ringabschnitt zwischen einer Dichtstellung, in der eine Dichtwirkung der Dichtanordnung am größten ist, und einer Abhebestellung, in der die Dichtwirkung der Dichtanordnung geringer als in der Dichtstellung ist, radial verlagerbar, insbesondere verschwenkbar, ist.

Zu Anspruch 2 wird angemerkt, dass das radiale Verlagern des zweiten axialen Ringabschnitts zwischen der Dichtstellung und der Abhebestellung also automatisch bei Antriebsbewegungen des Spindelantriebs geschieht, sodass keine separate Mechanik zu diesem Zweck notwendig ist.

Zu Anspruch 3 wird angemerkt, dass der axiale Dichtabschnitt also bei der radialen Verlagerung des zweiten Ringabschnitts mit verlagert wird. Dieser Dichtabschnitt kann auch eine Dichtlippe aufweisen, die in der Abhebestellung vorzugsweise das jeweilige Rohr nicht mehr berührt.

Anspruch 4 definiert mehrere umfänglich nebeneinander angeordnete Umfangssegmente, die den zweiten axialen Ringabschnitt bilden und jeweils verlagerbar bzw. schwenkbar sind. "Jeweils verlagerbar" meint, dass jedes Umfangssegment unabhängig von dem dazu benachbarten Umfangssegment verlagerbar ist. Die Umfangssegmente können umfänglich voneinander getrennt, aber auch umfänglich untereinander elastisch verbunden sein, wobei die Umfangssegmente selbst aber weniger elastisch als die Verbindung zwischen diesen ist. Auf diese Weise lässt sich besonders effizient eine radiale Verlagerung des zweiten axialen Ringabschnitt bzw. Dichtabschnitts erreichen.

Die Ansprüche 5 und 6 definieren besonders bevorzugte Materialien des ersten und/oder zweiten axiale Ringabschnitts und/oder der Umfangssegmente. Besonders bevorzugt ist eine Kombination aus Hartkomponente und Weichkomponente, also zweier Materialien, die sich durch ihre Elastizität und/oder Shorehärte unterscheiden. Die Hartkomponente dient dann insbesondere als Funktionsträger, die Weichkomponente für die Dichtfunktion.

Zu Anspruch 7 wird angemerkt, die Stege in der Dichtstellung und/oder in der Abhebestellung auch umfänglich voneinander beanstandet sein können. Hiermit können die radialen Bewegungen besonders einfach erfolgen.

Anspruch 8 definiert einen axialen Kontaktabschnitt des zweiten axialen Ringabschnitts und/oder der Umfangssegmente, der mit Kontaktrippen eines Laufabschnitts des Rohres zusammenwirkt, an dem die ringförmige Dichtanordnung entlanggleitet. Bei Kontakt wird der Kontaktabschnitt von den Kontaktrippen weggedrückt, wodurch sich der zweite axiale Ringabschnitt und/oder die Umfangssegmente radial, beispielsweise radial nach außen, in die Abhebestellung verlagern. An den Kontaktabschnitt schließt sich ein rippenfreier Dichtabschnitt an, in dem der Kontaktabschnitt nicht weggedrückt wird, sodass der zweite axiale Ringabschnitt und/oder die Umfangssegmente in der Dichtstellung bleiben bzw. in die Dichtstellung gelangen.

Zu Anspruch 9 wird angemerkt, dass die Stege also einen Verlauf mit einer axialen und einer umfänglichen Richtungskomponente haben. Dies gewährleistet, dass auch bei größeren Zwischenräumen zwischen umfänglich benachbarten Stegen die Umfangssegmente stets optimal mit den Kontaktrippen in Kontakt kommen können.

Bevorzugte Verbindungsmöglichkeiten zum Fixieren der Dichtanordnung an dem jeweiligen Rohr, beispielsweise Außenrohr, sind Gegenstand von Anspruch 12.

Zu Anspruch 15 wird angemerkt, dass durch die Antriebseinheit mit dem Antriebsmotor eine auf die beiden Antriebsabschnitte wirkende motorische Antriebskraft erzeugbar ist. Ferner wird angemerkt, dass, indem alternativ oder zusätzlich mindestens eine Schraubenfeder innerhalb des Innenrohrs angeordnet ist, die die beiden Antriebsabschnitte gegeneinander vorspannt, eine entsprechende Federkraft, insbesondere Druckkraft, als Antriebskraft eine Verstellung des Spindelantriebs bewirken oder zumindest unterstützen kann. Insbesondere kann der optionale Antriebsmotor beim Verstellen des Spindelantriebs, insbesondere beim Ausfahren bei einer schweren Heckklappe als Verschlusselement, durch die Federkraft unterstützt werden.

Zu Anspruch 16 wird angemerkt, dass auf diese Weise die wesentlichen Bauteile des Spindelantriebs optimal geschützt sind.

Im Folgenden wird die Erfindung anhand einer lediglich Ausführungsbeispiele darstellenden Zeichnung näher erläutert. In der Zeichnung zeigt
- Fig. 1: den Heckbereich eines Kraftfahrzeugs mit einem vorschlagsgemäßen Spindelantrieb für das dortige Verschlusselement,
- Fig. 2: eine seitliche Schnittansicht des Spindelantriebs gemäß Fig. 1 in der a) Einfahrstellung und b) Ausfahrstellung,
- Fig. 3: unterschiedliche Ansichten einer Dichtanordnung des Spindelantriebs gemäß Fig. 1 mit einem Ringabschnitt der Dichtanordnung in einer Dichtstellung und
- Fig. 4: unterschiedliche Ansichten der Dichtanordnung gemäß Fig. 3 mit dem Ringabschnitt in einer Abhebestellung.

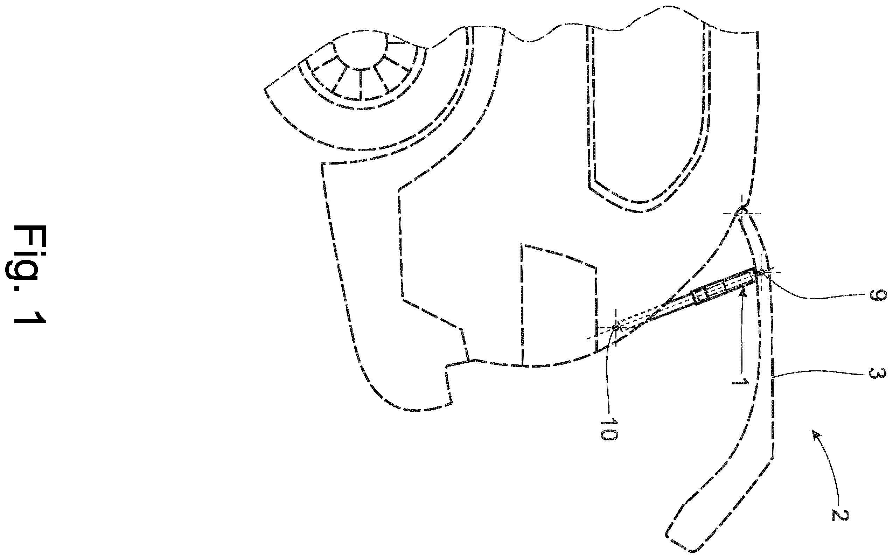

Der in Fig.1 dargestellte Spindelantrieb 1 ist Bestandteil einer Verschlusselementanordnung 2 mit einem Verschlusselement 3 eines Kraftfahrzeugs. Der Begriff "Verschlusselement 3" ist vorliegend weit zu verstehen, wie im einleitenden Teil der Beschreibung erläutert worden ist. Vorliegend handelt es sich bei dem Verschlusselement 3 um die Heckklappe eines Kraftfahrzeugs.

Alle diesbezüglichen Ausführungen gelten für alle anderen Arten von Verschlusselementen 3 entsprechend.

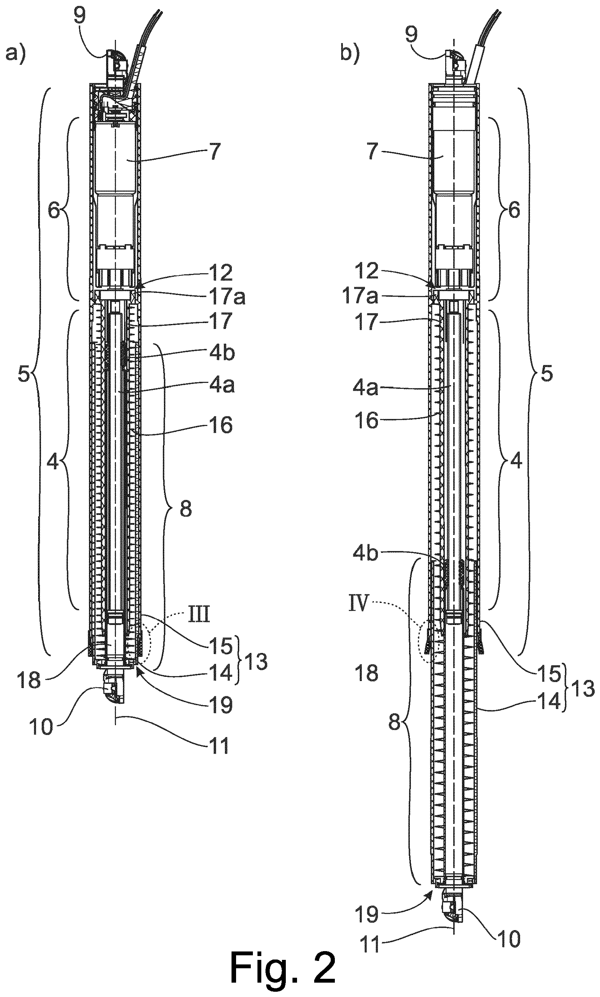

Der Spindelantrieb 1 weist ein in Fig. 2 gezeigtes Spindel-Spindelmuttergetriebe 4 zur Durchführung bzw. Erzeugung linearer Antriebsbewegungen auf. Das Spindel-Spindelmuttergetriebe 4 ist in üblicher Weise mit einer Spindel 4a und mit einer mit der Spindel 4a kämmenden Spindelmutter 4b ausgestattet. Bei dem hier dargestellten Ausführungsbeispiel eines Spindelantriebs 1 ist die Spindel 4a motorisch angetrieben, während die Spindelmutter 4b verdrehgesichert ist und daher je nach Verstellung der Spindel 4a eine lineare Antriebsbewegung vollzieht.

Ein spindelseitiger Antriebsabschnitt 5 des Spindelantriebs 1 weist zumindest eine Spindel 4a des Spindel-Spindelmuttergetriebes 4 auf, sowie hier und vorzugsweise auch eine Antriebseinheit 6 mit einem insbesondere elektrischen Antriebsmotor 7, dem die Spindel 4a hier nachgeschaltet ist. Der Begriff "nachgeschaltet" bedeutet vorliegend stets, dass die nachgeschaltete Komponente mit der vorgeschalteten Komponente mechanisch gekoppelt ist.

Es sei hervorgehoben, dass bei dem vorschlagsgemäßen Spindelantrieb 1 auf eine obige Antriebseinheit mit Antriebsmotor auch verzichtet werden kann. In diesem Fall spricht man auch von der sogenannten Passivseite der Verschlusselementanordnung 2. In dem Ausführungsbeispiel ist jedoch eine Antriebseinheit 6 mit Antriebsmotor 7 vorgesehen, wobei man dann von der sogenannten Aktivseite der Verschlusselementanordnung 2 spricht. Die Verschlusselementanordnung 2 kann grundsätzlich nur die eine (aktive) oder andere (passive) Spindelantriebsart oder eine Kombination beider Spindelantriebsarten aufweisen.

Ein spindelmutterseitiger Antriebsabschnitt 8 des Spindelantriebs 1 weist zumindest die Spindelmutter 4b des Spindel-Spindelmuttergetriebes 4 auf.

Bei einer Betätigung des optionalen Antriebsmotors 7 kommt es entsprechend zu einer linearen Verstellung der beiden Antriebsabschnitte 5, 8. Um die Antriebsabschnitte 5, 8 mit dem Kraftfahrzeug koppeln und die motorisch erzeugten linearen Antriebsbewegungen ausleiten zu können, ist der spindelseitige Antriebsabschnitt 5 mit einem spindelseitigen Antriebsanschluss 9 und der spindelmutterseitige Antriebsabschnitt 8 mit einem spindelmutterseitigen Antriebsanschluss 10 ausgestattet. Die Antriebsanschlüsse 9, 10 sind hier und vorzugsweise als Kugelpfannen ausgestaltet, die im eingebauten Zustand jeweils mit kraftfahrzeugseitigen Kugelköpfen in Eingriff stehen. Andere Arten der Antriebsanschlüsse sind denkbar.

Wie der Darstellung gemäß Fig. 2 zu entnehmen ist, sind das Spindel-Spindelmuttergetriebe 4 und die optionale Antriebseinheit 6 entlang der geometrischen Spindelachse 11 hintereinander angeordnet. Dies betrifft hier und vorzugsweise auch die Antriebsanschlüsse 9, 10, die ebenfalls auf der geometrischen Spindelachse 11 angeordnet sind.

Um das Innere 12 des Spindelantriebs 1 gegen äußere Einflüsse zu schützen, ist ein Spindelantriebsgehäuse 13 mit einem Innenrohr 14 und einem Außenrohr 15 vorgesehen, wobei das Innenrohr 14 teleskopartig in dem Außenrohr 15 läuft.

Das Innenrohr 14 ist mit dem spindelmutterseitigen Antriebsabschnitt 8 verbunden, während das Außenrohr 15 mit dem spindelseitigen Antriebsabschnitt 5 verbunden ist.

Im Inneren 12 des Spindelantriebs 1 ist hier und vorzugsweise mindestens eine Schraubenfeder 16 vorgesehen. Im Einzelnen ist eine Schraubenfeder 16 innerhalb des Innenrohrs 14 koaxial zu der geometrischen Spindelachse 11 angeordnet, die die beiden Antriebsabschnitte 5, 8 gegeneinander vorspannt. Hier und vorzugsweise spannt die Schraubenfeder 16 die beiden Antriebsabschnitte 5, 8 in die in Fig. 2b) gezeigte, ausgefahrene Stellung vor. Dies kann auch umgekehrt vorgesehen sein. Die Schraubenfeder 16 ist hier und vorzugsweise entsprechend als Schraubendruckfeder ausgestaltet.

Bei dem in Fig. 2 dargestellten Ausführungsbeispiel ist dem Spindelantrieb 1 nur eine Schraubenfeder 16 zugeordnet. Grundsätzlich können aber auch zwei oder mehrere Schraubenfedern 16 vorgesehen sein, die jeweils koaxial zu der geometrischen Spindelachse 11 ausgerichtet sind.

Hervorzuheben ist weiter, dass ein Torsionsrohr 17 innerhalb der mindestens einen Schraubenfeder 16 verläuft und an einem Ende an dem spindelseitigen Antriebsabschnitt 5 festgelegt ist. Das Torsionsrohr 17 hat zum einen die Funktion eines Federführungsrohrs, das die Schraubenfeder 16 in bezogen auf die geometrische Spindelachse 11 radialer Richtung derart abstützt, dass eine entsprechend radiale Auslenkung der Schraubenfeder 16 vermieden wird. Das Torsionsrohr 17 ist aber zum anderen auch Teil einer Verdrehsicherung für die Spindelmutter 4b, die am Torsionsrohr 17 lediglich axial verfahrbar ist.

Der Darstellung gemäß Fig. 2 ist ferner zu entnehmen, dass die Spindelmutter 4b über ein Spindelmutterrohr 18 mit dem spindelmutterseitigen Antriebsanschluss 10 verbunden ist.

Bemerkenswert ist noch, dass das Torsionsrohr 17 an einem seiner Enden, hier am spindelseitigen Ende 17a, an dem spindelseitigen Antriebsabschnitt 5 festgelegt ist. Dies bedeutet, dass das Torsionsrohr 17 gegenüber der linearen Verstellung des spindelmutterseitigen Antriebsabschnitts 8 und damit des Innenrohrs 14 feststeht. Damit läuft das freie Ende 19 des Innenrohrs 14 das, dem spindelmutterseitigen Antriebsanschluss 10 abgewandt ist, an dem Torsionsrohr 17 entlang.

Hier und vorzugsweise ist es ferner so, dass das Spindelantriebsgehäuse 13 das Spindel-Spindelmuttergetriebe 4, den Antriebsmotor 7, das Torsionsrohr 17, das Spindelmutterrohr 18 und/oder die mindestens eine Schraubenfeder 16, insbesondere über dessen gesamte axiale Erstreckung, radial umgibt.

Zur Abdichtung des Inneren 12 des Spindelantriebs 1 gegen Feuchtigkeitseintritt weist hier das Außenrohr 15, gemäß einer nicht dargestellten Alternative das Innenrohr 14, eine bezogen auf die geometrische Spindelachse 11 umlaufende ringförmige Dichtanordnung 20 auf, die während der Durchführung der Antriebsbewegungen an dem jeweils anderen Rohr, hier also dem Innenrohr 14, des Spindelantriebsgehäuses 13 entlanggleitet.

Wesentlich ist nun, dass die Dichtanordnung 20 einen ersten axialen Ringabschnitt 21 und einen bezogen auf die geometrische Spindelachse 11 axial daran angrenzenden, beweglich, insbesondere schwenkbar, mit dem ersten axialen Ringabschnitt 21 verbundenen zweiten axialen Ringabschnitt 22 aufweist, und dass bei der Durchführung der Antriebsbewegungen der zweite axiale Ringabschnitt 22 gegenüber dem ersten axialen Ringabschnitt 21 zwischen einer Dichtstellung, in der eine Dichtwirkung der Dichtanordnung 20 am größten ist, und einer Abhebestellung, in der die Dichtwirkung der Dichtanordnung 20 geringer als in der Dichtstellung ist, radial verlagerbar, insbesondere verschwenkbar, ist.

Weiter ist hier und vorzugsweise vorgesehen, dass eine axiale Relativbewegung des Außenrohrs 15 gegenüber dem Innenrohr 14 das radiale Verlagern, insbesondere Verschwenken, des zweiten axialen Ringabschnitts 22 zwischen der Dichtstellung und der Abhebestellung bewirkt. Das Verlagern geschieht also automatisch durch die Antriebsbewegungen des Spindelantriebs 1.

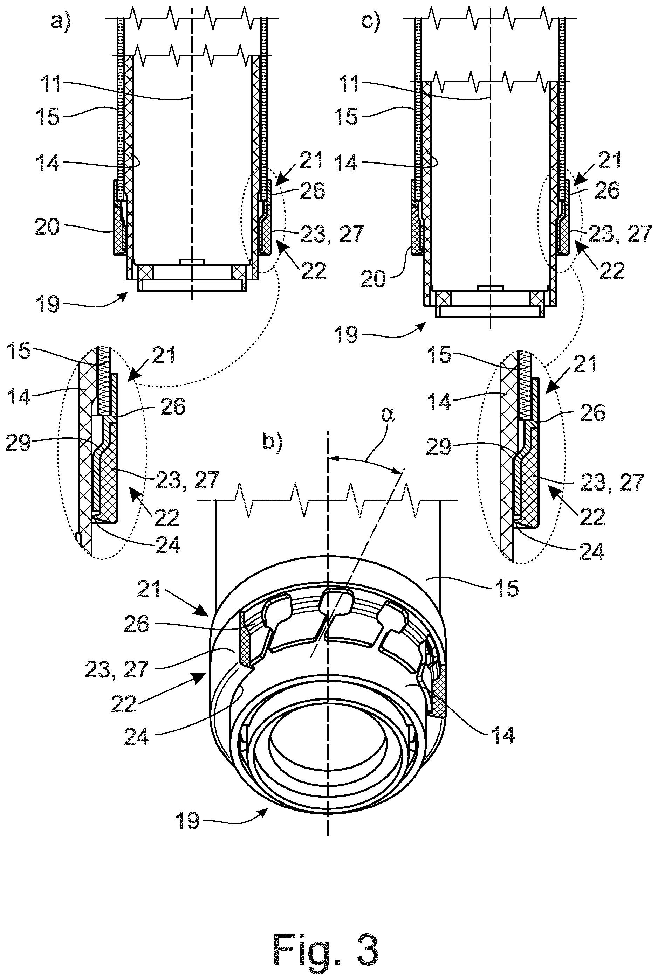

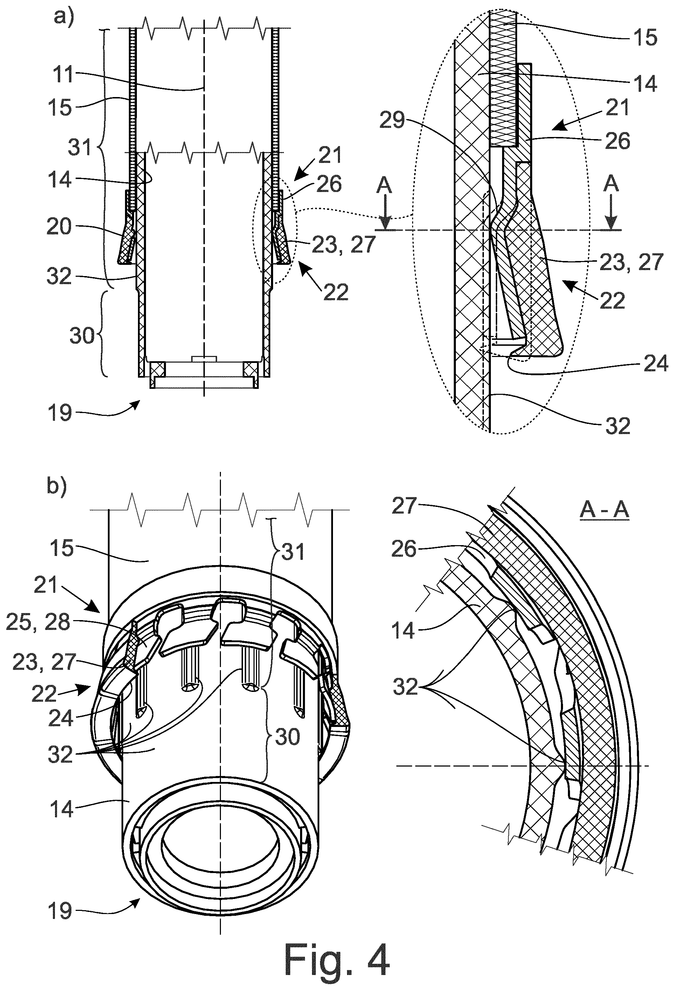

Wie die Fig. 3 und 4 zeigen, weist hier und vorzugsweise der zweite axiale Ringabschnitt 22 einen axialen Dichtabschnitt 23 auf, der in der Dichtstellung mit einer größeren radialen Andruckkraft als in der Abhebestellung an das jeweilige Rohr des Spindelantriebsgehäuses 13 gedrückt wird. Hier und vorzugsweise weist der axiale Dichtabschnitt 23 eine bezogen auf die geometrische Spindelachse 11 umlaufende Dichtlippe 24 auf, die in der Dichtstellung mit einer größeren radialen Andruckkraft als in der Abhebestellung an das jeweilige Rohr, hier das Innenrohr 14, des Spindelantriebsgehäuses 13 gedrückt wird.

Zum Verlagern, insbesondere Verschwenken, des zweiten axialen Ringabschnitts 22 zwischen der Dichtstellung und der Abhebestellung wird hier und vorzugsweise der zweite axiale Ringabschnitt 22 von mehreren umfänglich nebeneinander angeordneten Umfangssegmenten 25 gebildet, die jeweils verlagerbar, insbesondere um eine bezogen auf die geometrische Spindelachse 11 tangentiale geometrische Schwenkachse schwenkbar, sind. Den verlagerten bzw. verschwenkten Zustand zeigt Fig. 4.

Weiter ist hier und vorzugsweise vorgesehen, dass der erste axiale Ringabschnitt 21 und/oder der zweite axiale Ringabschnitt 22 und/oder die Umfangssegmente 25 jeweils aus einer Hartkomponente 26 und einer Weichkomponente 27 gebildet sind, die insbesondere zusammen ein einstückiges Zweikomponenten-Spritzgussteil bilden. Die Dichtlippe 24 wird hier auch von der Weichkomponente 27 gebildet.

Mit den Begriffen "Hartkomponente" und "Weichkomponente" ist hier gemeint, dass sich das Material der Bauteile in seiner Elastizität und/oder Shorehärte deutlich unterscheidet, das heißt der Elastizitätsmodul sich um mindestens 100 N/mm², vorzugsweise um mindestens 250 N/mm², weiter vorzugsweise um mindestens 500 N/mm², unterscheidet. Eine Hartkomponente ist aus einem weniger elastischen Material, insbesondere Kunststoffmaterial, als eine Weichkomponente gebildet. Mit einer Hartkomponente ist hier und vorzugsweise ein Bauteil, insbesondere Kunststoffteil, gemeint, das einen Elastizitätsmodul von mindestens 1000 N/mm² und/oder eine Shore A-Härte von mindestens 95, vorzugsweise mindestens 100, und/oder eine Shore C-Härte von mindestens 45, vorzugsweise mindestens 70, aufweist. Eine Weichkomponente ist hier und vorzugsweise ein Bauteil, insbesondere Kunststoffteil, mit einem Elastizitätsmodul von höchstens 500 N/mm² und/oder eine Shore A-Härte von höchstens 85, vorzugsweise höchstens 75, und/oder eine Shore C-Härte von höchstens 30, vorzugsweise höchstens 25.

Die Hartkomponente 26 wird bei dem hier dargestellten Ausführungsbeispiel aus einem Metall oder einem Kunststoffmaterial, insbesondere einem glasfaserverstärkten Kunststoffmaterial oder Polyamid, gebildet. Zusätzlich oder alternativ kann, wie hier, die Weichkomponente 27 aus einem dauerelastischen Kunststoffmaterial, insbesondere einem Elastomer, vorzugsweise thermoplastischen Elastomer definiert nach DIN EN ISO 18064, ISO 18064, oder Flüssig-Silikon (Liquid Silicone Rubber, LSR), gebildet werden.

Die Fig. 3b) und 4b) zeigen ferner, dass hier und vorzugsweise die Hartkomponente 26 mehrere umfänglich voneinander getrennte Stege 28 aufweist. Diese sind hier und vorzugsweise in die Weichkomponente 27 eingebettet oder die Weichkomponente 27 ist auf die Stege 28 aufgetragen, beispielsweise angespritzt. Hier und vorzugsweise ist die Weichkomponente 27 bezogen auf die geometrische Spindelachse 11 unterbrechungsfrei umlaufend angeordnet, verbindet also die Stege 28 miteinander in Umfangsrichtung.

Hier und vorzugsweise ist es nun so, dass der zweite axiale Ringabschnitt 22 und/oder die Umfangssegmente 25 jeweils einen axialen Kontaktabschnitt 29 aufweisen, der gegenüber dem ersten axialen Ringabschnitt 21 und/oder den geometrischen Schwenkachsen radial zu dem Rohr, hier Innenrohr 14, des Spindelantriebsgehäuses 13 vorspringt, an dem die ringförmige Dichtanordnung 20 bei der Durchführung der Antriebsbewegungen entlanggleitet. Das Rohr, zu dem der axiale Kontaktabschnitt 29 vorspringt, hier das Innenrohr 14, weist außerdem einen axialen Anlageabschnitt 30 für eine dichtende Anlage des Dichtabschnitts 23 und einen angrenzenden axialen Laufabschnitt 31 auf, der gegenüber dem axialen Anlageabschnitt 30 radial hervorstehende, sich axial erstreckende Kontaktrippen 32 aufweist. Hier und vorzugsweise wird der axiale Kontaktabschnitt 29 von der Hartkomponente 26 gebildet.

Weiter ist hier und vorzugsweise vorgesehen, dass die Stege 28, damit diese sicher mit den Kontaktrippen 32 in Kontakt kommen, einen bezogen auf die geometrische Spindelachse 11 drallförmigen Verlauf haben, was hier durch den Winkel α symbolisiert ist.

Weiter ist hier und vorzugsweise vorgesehen, dass eine von einer Antriebsbewegung des Spindelantriebs 1 aus der eingefahrenen Stellung in Richtung der ausgefahrenen Stellung resultierende, erste axiale Relativbewegung des Außenrohrs 15 gegenüber dem Innenrohr 14 das radiale Verlagern, insbesondere Verschwenken, des zweiten axialen Ringabschnitts 22 von der Dichtstellung in die Abhebestellung bewirkt. Dabei kommt hier bei der ersten axialen Relativbewegung der axiale Kontaktabschnitt 29 mit dem axialen Laufabschnitt 31 in Kontakt derart, dass die Kontaktrippen 32 den zweiten axialen Ringabschnitt 22 und/oder die Umfangssegmente 25 jeweils radial auslenken. Es wird hier und vorzugsweise bei der ersten axialen Relativbewegung durch das Auslenken des zweiten axialen Ringabschnitts 22 und/oder der Umfangssegmente 25 die Dichtlippe 24 vom Anlageabschnitt 30 abgehoben und im weiteren Verlauf der ersten axialen Relativbewegung an den Kontaktrippen 32, insbesondere radial dazu beabstandet, entlanggeführt. So wird dann beim Ausfahren des Spindelantriebs die Reibung zwischen der Dichtanordnung 20 und dem jeweiligen Rohr, hier dem Innenrohr 14, erheblich reduziert.

Umgekehrt ist es dabei so, dass eine von einer Antriebsbewegung des Spindelantriebs 1 aus Richtung der ausgefahrenen Stellung in die eingefahrene Stellung resultierende, zweite axiale Relativbewegung des Außenrohrs 15 gegenüber dem Innenrohr 14 ein Zurückverlagern, insbesondere Zurückschwenken, des zweiten axialen Ringabschnitts 22 von der Abhebestellung in die Dichtstellung bewirkt. Dabei kommt hier bei der zweiten axialen Relativbewegung der axiale Kontaktabschnitt 29 von dem axialen Laufabschnitt 31 außer Eingriff derart, dass der zweite axiale Ringabschnitt 22 und/oder die Umfangssegmente 25 jeweils radial zurückfedern können. Hier und vorzugsweise kommt bei der zweiten axialen Relativbewegung durch das Zurückfedern des zweiten axialen Ringabschnitts 22 und/oder der Umfangssegmente 25 die Dichtlippe 24 aus ihrem abgehobenen Zustand wieder mit dem Anlageabschnitt 30 in Kontakt. So wird dann in der eingefahrenen Stellung des Spindelantriebs eine optimale Abdichtung erzielt.

Weiter ist hier und vorzugsweise vorgesehen, dass die Dichtanordnung 20, insbesondere über den ersten axialen Ringabschnitt 21, axialfest und drehfest am Außenrohr 15 fixiert ist und bei der Durchführung der Antriebsbewegungen der zweite axiale Ringabschnitt 22 gegenüber dem ersten axialen Ringabschnitt 21 von der Dichtstellung in die Abhebestellung radial nach außen verlagerbar, insbesondere verschwenkbar, ist. Gemäß einer hier nicht dargestellten Alternative kann auch vorgesehen sein, dass die Dichtanordnung 20, insbesondere über den ersten axialen Ringabschnitt 21, axialfest und drehfest am Innenrohr 14 fixiert ist und bei der Durchführung der Antriebsbewegungen der zweite axiale Ringabschnitt 22 gegenüber dem ersten axialen Ringabschnitt 21 von der Dichtstellung in die Abhebestellung radial nach innen verlagerbar, insbesondere verschwenkbar, ist. Hier und vorzugsweise wird die axialfeste und drehfeste Fixierung durch eine stoffschlüssige Verbindung, insbesondere durch Verkleben oder Anspritzen, und/oder eine axial formschlüssige Verbindung, insbesondere durch Verrasten, bereitgestellt.

Wie Fig. 2 zeigt, ist hier und vorzugsweise außerdem eine Verdrehsicherung zwischen Innenrohr 14 und Außenrohr 15 vorgesehen, die hier dadurch gebildet ist, dass das zu dem einen der Rohre, hier dem Außenrohr 15, drehfeste Torsionsrohr 17, das zur Spindel 4a und hier zum Antriebsmotor 7 axialfest ist, und das zu dem anderen der Rohre, insbesondere Innenrohr 14, drehfeste Spindelmutterrohr 18, das zur Spindelmutter 4b axialfest ist, formschlüssig miteinander in Eingriff stehen. Grundsätzlich ist es aber auch denkbar, dass das Innenrohr 14 und das Außenrohr 15 selbst formschlüssig miteinander in Eingriff stehen.

## Patentansprüche

1. Spindelantrieb für ein Verschlusselement (3) eines Kraftfahrzeugs mit einem Spindel-Spindelmuttergetriebe (4) zur Durchführung linearer Antriebsbewegungen des Spindelantriebs (1) zwischen einer eingefahrenen Stellung und einer ausgefahrenen Stellung, wobei ein spindelseitiger Antriebsabschnitt (5) des Spindelantriebs (1) eine Spindel (4a) des Spindel-Spindelmuttergetriebes (4) aufweist, wobei ein spindelmutterseitiger Antriebsabschnitt (8) des Spindelantriebs (1) eine Spindelmutter (4b) des Spindel-Spindelmuttergetriebes (4) aufweist, wobei die beiden Antriebsabschnitte (5, 8) jeweils mit einem Antriebsanschluss (9, 10) zur Kopplung am Kraftfahrzeug und insbesondere zum Ausleiten der Antriebsbewegungen verbunden sind, wobei ein Spindelantriebsgehäuse (13) mit einem Innenrohr (14) und einem Außenrohr (15) vorgesehen ist, wobei das Innenrohr (14) teleskopartig in dem Außenrohr (15) läuft, wobei das Außenrohr (15) oder das Innenrohr (14) eine bezogen auf die geometrische Spindelachse (11) umlaufende ringförmige Dichtanordnung (20) aufweist, die während der Durchführung der Antriebsbewegungen an dem jeweils anderen Rohr des Spindelantriebsgehäuses (13) entlanggleitet,
**dadurch gekennzeichnet,**
**dass** die Dichtanordnung (20) einen ersten axialen Ringabschnitt (21) und einen bezogen auf die geometrische Spindelachse (11) axial daran angrenzenden, beweglich, insbesondere schwenkbar, mit dem ersten axialen Ringabschnitt (21) verbundenen zweiten axialen Ringabschnitt (22) aufweist, und dass bei der Durchführung der Antriebsbewegungen der zweite axiale Ringabschnitt (22) gegenüber dem ersten axialen Ringabschnitt (21) zwischen einer Dichtstellung, in der eine Dichtwirkung der Dichtanordnung (20) am größten ist, und einer Abhebestellung, in der die Dichtwirkung der Dichtanordnung (20) geringer als in der Dichtstellung ist, radial verlagerbar, insbesondere verschwenkbar, ist.

2. Spindelantrieb nach Anspruch 1, **dadurch gekennzeichnet, dass** eine axiale Relativbewegung des Außenrohrs (15) gegenüber dem Innenrohr (14) das radiale Verlagern, insbesondere Verschwenken, des zweiten axialen Ringabschnitts (22) zwischen der Dichtstellung und der Abhebestellung bewirkt.

3. Spindelantrieb nach Anspruch 1 oder 2, **dadurch gekennzeichnet, dass** der zweite axiale Ringabschnitt (22) einen axialen Dichtabschnitt (23) aufweist, der in der Dichtstellung mit einer größeren radialen Andruckkraft als in der Abhebestellung an das jeweilige Rohr des Spindelantriebsgehäuses (13) gedrückt wird, vorzugsweise, dass der axiale Dichtabschnitt (23) eine bezogen auf die geometrische Spindelachse (11) umlaufende Dichtlippe (24) aufweist, die in der Dichtstellung mit einer größeren radialen Andruckkraft als in der Abhebestellung an das jeweilige Rohr des Spindelantriebsgehäuses (13) gedrückt wird.

4. Spindelantrieb nach einem der vorhergehenden Ansprüche, **dadurch gekennzeichnet, dass** zum Verlagern, insbesondere Verschwenken, des zweiten axialen Ringabschnitts (22) zwischen der Dichtstellung und der Abhebestellung der zweite axiale Ringabschnitt (22) von mehreren umfänglich nebeneinander angeordneten Umfangssegmenten (25) gebildet wird, die jeweils verlagerbar, insbesondere um eine bezogen auf die geometrische Spindelachse (11) tangentiale geometrische Schwenkachse schwenkbar, sind.

5. Spindelantrieb nach einem der vorhergehenden Ansprüche, **dadurch gekennzeichnet, dass** der erste axiale Ringabschnitt (21) und/oder der zweite axiale Ringabschnitt (22) und/oder die Umfangssegmente (25) jeweils aus einer Hartkomponente (26) und einer Weichkomponente (27) gebildet sind, die insbesondere zusammen ein einstückiges Zweikomponenten-Spritzgussteil bilden, vorzugsweise, dass die Dichtlippe (24) von der Weichkomponente (27) gebildet wird.

6. Spindelantrieb nach einem der vorhergehenden Ansprüche, **dadurch gekennzeichnet, dass** die Hartkomponente (26) aus einem Metall oder einem Kunststoffmaterial, das einen geringeren Elastizitätsmodul und/oder eine höhere Shorehärte als die Weichkomponente (27) hat, insbesondere einem glasfaserverstärkten Kunststoffmaterial oder Polyamid, gebildet wird, und/oder, dass die Weichkomponente (27) aus einem dauerelastischen Kunststoffmaterial, das einen höheren Elastizitätsmodul und/oder eine geringere Shorehärte als die Hartkomponente (26) hat, insbesondere einem Elastomer oder Flüssig-Silikon, gebildet wird.

7. Spindelantrieb nach einem der vorhergehenden Ansprüche, **dadurch gekennzeichnet, dass** die Hartkomponente (26) mehrere umfänglich voneinander getrennte Stege (28) aufweist, vorzugsweise, dass die Stege (28) in die Weichkomponente (27) eingebettet sind oder die Weichkomponente (27) auf die Stege (28) aufgetragen ist, weiter vorzugsweise, dass die Weichkomponente (27) bezogen auf die geometrische Spindelachse (11) unterbrechungsfrei umlaufend angeordnet ist.

8. Spindelantrieb nach einem der vorhergehenden Ansprüche, **dadurch gekennzeichnet, dass** der zweite axiale Ringabschnitt (22) und/oder die Umfangssegmente (25) jeweils einen axialen Kontaktabschnitt (29) aufweisen, der gegenüber dem ersten axialen Ringabschnitt (21) und/oder den geometrischen Schwenkachsen radial zu dem Rohr des Spindelantriebsgehäuses (13) vorspringt, an dem die ringförmige Dichtanordnung (20) bei der Durchführung der Antriebsbewegungen entlanggleitet, und dass das Rohr, zu dem der axiale Kontaktabschnitt (29) vorspringt, einen axialen Anlageabschnitt (30) für eine dichtende Anlage des Dichtabschnitts (23) und einen angrenzenden axialen Laufabschnitt (31) aufweist, der gegenüber dem axialen Anlageabschnitt (30) radial hervorstehende, sich axial erstreckende Kontaktrippen (32) aufweist, vorzugsweise, dass der axiale Kontaktabschnitt (29) von der Hartkomponente (26) gebildet wird.

9. Spindelantrieb nach einem der vorhergehenden Ansprüche, **dadurch gekennzeichnet, dass** die Stege (28) einen bezogen auf die geometrische Spindelachse (11) drallförmigen Verlauf haben.

10. Spindelantrieb nach einem der vorhergehenden Ansprüche, **dadurch gekennzeichnet, dass** eine von einer Antriebsbewegung des Spindelantriebs (1) aus der eingefahrenen Stellung in Richtung der ausgefahrenen Stellung resultierende, erste axiale Relativbewegung des Außenrohrs (15) gegenüber dem Innenrohr (14) das radiale Verlagern, insbesondere Verschwenken, des zweiten axialen Ringabschnitts (22) von der Dichtstellung in die Abhebestellung bewirkt, vorzugsweise, dass bei der ersten axialen Relativbewegung der axiale Kontaktabschnitt (29) mit dem axialen Laufabschnitt (31) in Kontakt kommt derart, dass die Kontaktrippen (32) den zweiten axialen Ringabschnitt (22) und/oder die Umfangssegmente (25) jeweils radial auslenken, weiter vorzugsweise, dass bei der ersten axialen Relativbewegung durch das Auslenken des zweiten axialen Ringabschnitts (22) und/oder der Umfangssegmente (25) die Dichtlippe (24) vom Anlageabschnitt (30) abgehoben wird und im weiteren Verlauf der ersten axialen Relativbewegung an den Kontaktrippen (32), insbesondere radial dazu beabstandet, entlanggeführt wird.

11. Spindelantrieb nach einem der vorhergehenden Ansprüche, **dadurch gekennzeichnet, dass** eine von einer Antriebsbewegung des Spindelantriebs (1) aus Richtung der ausgefahrenen Stellung in die eingefahrene Stellung resultierende, zweite axiale Relativbewegung des Außenrohrs (15) gegenüber dem Innenrohr (14) ein Zurückverlagern, insbesondere Zurückschwenken, des zweiten axialen Ringabschnitts (22) von der Abhebestellung in die Dichtstellung bewirkt, vorzugsweise, dass bei der zweiten axialen Relativbewegung der axiale Kontaktabschnitt (29) von dem axialen Laufabschnitt (31) außer Eingriff kommt derart, dass der zweite axiale Ringabschnitt (22) und/oder die Umfangssegmente (25) jeweils radial zurückfedern können, weiter vorzugsweise, dass bei der zweiten axialen Relativbewegung durch das Zurückfedern des zweiten axialen Ringabschnitts (22) und/oder der Umfangssegmente (25) die Dichtlippe (24) aus ihrem abgehobenen Zustand wieder mit dem Anlageabschnitt (30) in Kontakt kommt.

12. Spindelantrieb nach einem der vorhergehenden Ansprüche, **dadurch gekennzeichnet, dass** die Dichtanordnung (20), insbesondere über den ersten axialen Ringabschnitt (21), axialfest und drehfest am Außenrohr (15) fixiert ist und bei der Durchführung der Antriebsbewegungen der zweite axiale Ringabschnitt (22) gegenüber dem ersten axialen Ringabschnitt (21) von der Dichtstellung in die Abhebestellung radial nach außen verlagerbar, insbesondere verschwenkbar, ist, oder, dass die Dichtanordnung (20), insbesondere über den ersten axialen Ringabschnitt (21), axialfest und drehfest am Innenrohr (14) fixiert ist und bei der Durchführung der Antriebsbewegungen der zweite axiale Ringabschnitt (22) gegenüber dem ersten axialen Ringabschnitt (21) von der Dichtstellung in die Abhebestellung radial nach innen verlagerbar, insbesondere verschwenkbar, ist, vorzugsweise, dass die axialfeste und drehfeste Fixierung durch eine stoffschlüssige Verbindung, insbesondere durch Verkleben oder Anspritzen, und/oder eine axial formschlüssige Verbindung, insbesondere durch Verrasten, bereitgestellt wird.

13. Spindelantrieb nach einem der vorhergehenden Ansprüche, **dadurch gekennzeichnet, dass** das Innenrohr (14) mit dem spindelmutterseitigen Antriebsabschnitt (8) und das Außenrohr (15) mit dem spindelseitigen Antriebsabschnitt (5) verbunden ist.

14. Spindelantrieb nach einem der vorhergehenden Ansprüche, **dadurch gekennzeichnet, dass** eine Verdrehsicherung zwischen Innenrohr (14) und Außenrohr (15) vorgesehen ist, vorzugsweise, dass die Verdrehsicherung dadurch gebildet ist, dass ein zu dem einen der Rohre, insbesondere dem Außenrohr (15), drehfestes Torsionsrohr (17), das zur Spindel (4a) axialfest ist, und ein zu dem anderen der Rohre, insbesondere Innenrohr (14), drehfestes Spindelmutterrohr (18), das zur Spindelmutter (4b) axialfest ist, formschlüssig miteinander in Eingriff stehen, oder, dass das Innenrohr (14) und das Außenrohr (15) selbst formschlüssig miteinander in Eingriff stehen.

15. Spindelantrieb nach einem der vorhergehenden Ansprüche, **dadurch gekennzeichnet, dass** der spindelseitige Antriebsabschnitt (5) eine Antriebseinheit (6) mit einem Antriebsmotor (7), dem die Spindel (4a) nachgeschaltet ist, aufweist und die Antriebseinheit (6) und das Spindel-Spindelmuttergetriebe (4) entlang der geometrischen Spindelachse (11) hintereinander angeordnet sind, und/oder, dass mindestens eine Schraubenfeder (16) innerhalb des Innenrohrs (14) koaxial zu der geometrischen Spindelachse (11) angeordnet ist, die die beiden Antriebsabschnitte (5, 8) gegeneinander vorspannt, vorzugsweise, dass ein Federführungsrohr innerhalb der mindestens einen Schraubenfeder (16) verläuft und an einem seiner Enden an dem spindelseitigen Antriebsabschnitt (5) festgelegt ist, weiter vorzugsweise, dass das Federführungsrohr von dem Torsionsrohr (17) gebildet wird.

16. Spindelantrieb nach einem der vorhergehenden Ansprüche, **dadurch gekennzeichnet, dass** das Spindelantriebsgehäuse (13) das Spindel-Spindelmuttergetriebe (4), den Antriebsmotor (7), das Torsionsrohr (17), das Spindelmutterrohr (18) und/oder die mindestens eine Schraubenfeder (16), insbesondere über dessen gesamte axiale Erstreckung, radial umgibt.

## Claims

1. Spindle drive for a closing element (3) of a motor vehicle, with a spindle-nut gear (4) for performing linear drive movements of the spindle drive (1) between a retracted position and an extended position, wherein a spindle-side drive portion (5) of the spindle drive (1) has a spindle (4a) of the spindle-nut gear (4), wherein a nut-side drive portion (8) of the spindle drive (1) has a spindle nut (4b) of the spindle-nut gear (4), wherein the two drive portions (5, 8) are each connected to a drive connection (9, 10) for coupling to the motor vehicle and in particular for transferring drive movements, wherein a spindle drive housing (13) with an inner tube (14) and an outer tube (15) is provided, wherein the inner tube (14) runs telescopically in the outer tube (15), wherein the outer tube (15) or the inner tube (14) has an annular sealing arrangement (20) which is circumferential to the geometric spindle axis (11) and slides along the respective other tube of the spindle drive housing (13) during performance of drive movements,
**characterized in that**
the sealing arrangement (20) has a first axial ring portion (21) and, axially adjacent thereto relative to the geometric spindle axis (11), a second axial ring portion (22) which is movably, in particular pivotably, connected to the first axial ring portion (21), and that on performance of drive movements, the second axial ring portion (22) is radially displaceable, in particular pivotable, relative to the first axial ring portion (21) between a sealing position in which a sealing effect of the sealing arrangement (20) is greatest, and a lift-off position in which the sealing effect of the sealing arrangement (20) is less than in the sealing position.

2. Spindle drive according to Claim 1, **characterized in that** an axial movement of the outer tube (15) relative to the inner tube (14) causes the radial displacement, in particular pivoting, of the second axial ring portion (22) between the sealing position and the lift-off position.

3. Spindle drive according to Claim 1 or 2, **characterized in that** the second axial ring portion (22) has an axial sealing portion (23) which presses on the respective tube of the spindle drive housing (13) with a greater radial contact force in the sealing position than in the lift-off position, preferably that the axial sealing portion (23) has a sealing lip (24) circumferential to the geometric spindle axis (11) which presses on the respective tube of the spindle drive housing (13) with a greater radial contact force in the sealing position than in the lift-off position.

4. Spindle drive according to any of the preceding claims, **characterized in that** for displacement, in particular pivoting, of the second axial ring portion (22) between the sealing position and the lift-off position, the second axial ring portion (22) is formed by multiple circumferential segments (25) which are arranged circumferentially next to one another and each displaceable, in particular pivotable about a geometric pivot axis tangential relative to the geometric spindle axis (11).

5. Spindle drive according to any of the preceding claims, **characterized in that** the first axial ring portion (21) and/or the second axial ring portion (22) and/or the circumferential segments (25) are each formed from a hard component (26) and a soft component (27), which in particular together form an integral two-component injection molding, and preferably that the sealing lip (24) is formed from the soft component (27).

6. Spindle drive according to any of the preceding claims, **characterized in that** the hard component (26) is made from a metal or a plastic material which has a lower modulus of elasticity and/or a higher Shore hardness than the soft component (27), in particular a glass-fiber-reinforced plastic material or polyamide, and/or that the soft component (27) is made from a permanently elastic plastic material which has a higher modulus of elasticity and/or a lower Shore hardness than the hard component (26), in particular an elastomer or liquid silicone.

7. Spindle drive according to any of the preceding claims, **characterized in that** the hard component (26) has several webs (28) spaced apart from one another circumferentially, preferably that the webs (28) are embedded in the soft component (27) or the soft component (27) is applied onto the webs (28), further preferably that the soft component (27) is arranged continuously circumferentially relative to the geometric spindle axis (11).

8. Spindle drive according to any of the preceding claims, **characterized in that** the second axial ring portion (22) and/or the circumferential segments (25) each have an axial contact portion (29) which juts out relative to the first axial ring portion (21) and/or the geometric pivot axes, radially to the tube of the spindle drive housing (13) along which the annular sealing arrangement (20) slides on performance of the drive movements, and that the tube to which the axial contact portion (29) juts out has an axial rest portion (30) for sealing contact of the sealing portion (23), and an adjacent axial running portion (31)which has axially extending contact ribs (32) protruding radially relative to the axial rest portion (32), preferably that the axial contact portion (29) is formed by the hard component (26).

9. Spindle drive according to any of the preceding claims, **characterized in that** the webs (28) have a swirl-like course relative to the geometric spindle axis (11).

10. Spindle drive according to any of the preceding claims, **characterized in that** a first axial movement of the outer tube (15) relative to the inner tube (14), resulting from a drive movement of the spindle drive (1) from the retracted position in the direction of the extended position, causes the radial displacement, in particular pivoting, of the second axial ring portion (22) from the sealing position into the lift-off position, preferably that during the first axial relative movement, the axial contact portion (29) comes into contact with the axial running portion (31) such that the contact ribs (32) deflect the second axial ring portion (22) and/or the circumferential segments (25) radially, further preferably that during the first axial relative movement, the deflection of the second axial ring portion (22) and/or the circumferential segments (25) causes the sealing lip (24) to lift off the rest portion (30), and during the further course of the first relative axial movement be guided along the contact ribs (32), in particular radially spaced therefrom.

11. Spindle drive according to any of the preceding claims, **characterized in that** a second axial movement of the outer tube (15) relative to the inner tube (14), resulting from a drive movement of the spindle drive (1) from the direction of the extended position into the retracted position, causes a return displacement, in particular a return pivoting, of the second axial ring portion (22) from the lift-off position into the sealing position, preferably that during the second axial relative movement, the axial contact portion (29) comes out of engagement with the axial running portion (31) such that the second axial ring portion (22) and/or the circumferential segments (25) can spring back radially, further preferably that during the second axial relative movement, the return springing of the second axial ring portion (22) and/or the circumferential segments (25) causes the sealing lip (24) to come out of its lift-off state back into contact with the rest portion (30).

12. Spindle drive according to any of the preceding claims, **characterized in that** the sealing arrangement (20), in particular via the first axial ring portion (21), is fastened axially and rotationally fixedly on the outer tube (15), and during performance of the drive movements, the second axial ring portion (22) is displaceable, in particular pivotable, radially outwardly relative to the first axial ring portion (21) from the sealing position into the lift-off position, or that the sealing arrangement (20), in particular via the first axial ring portion (21), is fastened axially and rotationally fixedly on the inner tube (14) and during performance of the drive movements, the second axial ring portion (22) is displaceable, in particular pivotable, radially inwardly relative to the first axial ring portion (21) from the sealing position into the lift-off position, preferably that the axially and rotationally fixed fastening takes place by a substance-bonded connection, in particular by gluing or molding, and/or an axially form-fitting connection, in particular latching.

13. Spindle drive according to any of the preceding claims, **characterized in that** the inner tube (14) is connected to the nut-side drive portion (8) and the outer tube (15) is connected to the spindle-side drive portion (5).

14. Spindle drive according to any of the preceding claims, **characterized in that** a twist lock is provided between the inner tube (14) and outer tube (15), preferably that the twist lock is formed **in that** a torsion tube (17), which is rotationally fixed relative to the one of the tubes, in particular the outer tube (15), and axially fixed relative to the spindle (4a), and a spindle nut tube (18) which is rotationally fixed relative to the other of the tubes, in particular the inner tube (14), and axially fixed relative to the spindle nut (4b), stand in form-fit engagement with one another, or that the inner tube (14) and the outer tube (15) themselves stand in form-fit engagement with one another.

15. Spindle drive according to any of the preceding claims, **characterized in that** the spindle-side drive portion (5) has a drive unit (6) with a drive motor (7), downstream of which the spindle (4a) is connected, and the drive unit (6) and spindle-nut gear (4) are arranged one behind the other along the geometric spindle axis (11), and/or that at least one coil spring (16) is arranged inside the inner tube (14) coaxially to the geometric spindle axis (11) and preloads the two drive portions (5, 8) against one another, preferably that a spring guide tube runs inside the at least one coil spring (16) and at one of its ends is fixed to the spindle-side drive portion (5), further preferably that the spring guide tube is formed by the torsion tube (17).

16. Spindle drive according to any of the preceding claims, **characterized in that** the spindle drive housing (13) radially surrounds the spindle-nut gear (4), the drive motor (7), the torsion tube (17), the spindle nut tube (18) and/or the at least one coil spring (16), in particular over their entire axial extent.

## Revendications

1. Système d'entraînement à broche pour un élément de fermeture (3) d'un véhicule automobile, comprenant un mécanisme (4) à engrènement broche-écrou de broche pour effectuer des mouvements d'entraînement linéaires du système d'entraînement à broche (1) entre une position rétractée et une position déployée, une partie d'entraînement (5) côté broche du système d'entraînement à broche (1) comprenant une broche (4a) du mécanisme (4) à engrènement broche-écrou de broche, une partie d'entraînement (8) côté écrou du système d'entraînement à broche (1) comprenant un écrou de broche (4b) du mécanisme (4) à engrènement broche-écrou de broche, les deux parties d'entraînement (5, 8) étant chacune reliées à un raccord d'entraînement (9, 10) pour la liaison au véhicule et en particulier pour la transmission des mouvements d'entraînement, un boîtier (13) de système d'entraînement à broche étant prévu avec un tube intérieur (14) et un tube extérieur (15), le tube intérieur (14) coulissant de manière télescopique dans le tube extérieur (15), le tube extérieur (15) ou le tube intérieur (14) comprenant un dispositif périphérique (20) d'étanchéité annulaire par rapport à l'axe géométrique de la broche (11), qui glisse le long dudit autre tube respectif du boîtier (13) de système d'entraînement à broche pendant l'exécution des mouvements d'entraînement,
**caractérisé**
**en ce que** le dispositif d'étanchéité (20) présente une première section annulaire axiale (21) et une deuxième section annulaire axiale (22), adjacente axialement à l'axe géométrique de broche (11), mobile, notamment pivotante, avec la première section annulaire axiale (21), et **en ce que**, lors de l'exécution des mouvements d'entraînement, la deuxième section annulaire axiale (22) est déplaçable radialement, notamment est pivotante, par rapport à la première section annulaire axiale (21) entre une position d'étanchéité, dans laquelle l'effet d'étanchéité du dispositif d'étanchéité (20) est maximal, et une position de retrait, dans laquelle l'effet d'étanchéité du dispositif d'étanchéité (20) est plus faible que dans la position d'étanchéité.

2. Système d'entraînement à broche selon la revendication 1, **caractérisé en ce qu'**un mouvement axial relatif du tube extérieur (15) par rapport au tube intérieur (14) provoque le déplacement radial, en particulier le pivotement, de la deuxième section annulaire axiale (22) entre la position d'étanchéité et la position de retrait.

3. Système d'entraînement à broche selon la revendication 1 ou la revendication 2, **caractérisé en ce que** la deuxième section annulaire axiale (22) comprend une partie d'étanchéité axiale (23) qui, en position d'étanchéité, est pressée contre le tube respectif du boîtier (13) du système d'entraînement à broche avec une force de pression radiale plus importante qu'en position de retrait, de préférence **en ce que** la partie d'étanchéité axiale (23) comprend une lèvre d'étanchéité (24) périphérique par rapport à l'axe géométrique de la broche (11), qui est pressée contre le tube respectif du boîtier (13) de système d'entraînement à broche avec une force de pression radiale plus importante en position d'étanchéité qu'en position de retrait.

4. Système d'entraînement à broche selon l'une des revendications précédentes, **caractérisé en ce que**, pour le déplacement, en particulier le pivotement, de la deuxième section annulaire axiale (22) entre la position d'étanchéité et la position de retrait, la deuxième section annulaire axiale (22) est formée par plusieurs segments périphériques (25) agencés côte à côte sur la circonférence, qui sont chacun aptes être déplacés, en particulier pivotés autour d'un axe de pivotement géométrique tangentiel par rapport à l'axe géométrique de la broche (11).

5. Système d'entraînement à broche selon l'une des revendications précédentes, **caractérisé en ce que** la première section annulaire axiale (21) et/ou la deuxième section annulaire axiale (22) et/ou les segments périphériques (25) sont chacun constitués d'un composant dur (26) et d'un composant souple (27), qui forment ensemble en particulier une pièce moulée par injection à deux composants d'une seule pièce, de préférence, la lèvre d'étanchéité (24) est formée par le composant souple (27).

6. Système d'entraînement à broche selon l'une des revendications précédentes, **caractérisé en ce que** le composant dur (26) est formé d'un métal ou d'une matière plastique qui a un module d'élasticité plus faible et/ou une dureté Shore plus élevée que le composant souple (27), en particulier un matériau plastique renforcé de fibres de verre ou du polyamide, et/ou **en ce que** le composant souple (27) est constitué d'un matériau plastique à élasticité permanente qui a un module d'élasticité plus élevé et/ou une dureté Shore plus faible que le composant dur (26), en particulier un élastomère ou du silicone liquide.

7. Système d'entraînement à broche selon l'une des revendications précédentes, **caractérisé en ce que** le composant dur (26) comprend plusieurs nervures (28) séparées les unes des autres sur leur pourtour, de préférence **en ce que** les nervures (28) sont noyées dans le composant souple (27) ou **en ce que** le composant souple (27) est appliqué sur les nervures (28), de préférence également **en ce que** le composant souple (27) est agencé de manière continue autour de l'axe géométrique de la broche (11).

8. Système d'entraînement à broche selon l'une des revendications précédentes, **caractérisé en ce que** la deuxième section annulaire axiale (22) et/ou les segments périphériques (25) comprennent chacun une partie de contact axiale (29) qui dépasse radialement par rapport à la première section annulaire axiale (21) et/ou aux axes de pivotement géométriques du tube du boîtier (13) du système d'entraînement à broche, sur lequel le dispositif d'étanchéité annulaire (20) glisse lors de l'exécution des mouvements d'entraînement, et **en ce que** le tube sur lequel dépasse la partie de contact axiale (29) comprend une partie de contact axiale (30) pour un contact étanche de la partie d'étanchéité (23) et une partie de déplacement axiale adjacente (31) qui comprend des nervures de contact (32) s'étendant axialement et faisant saillie radialement par rapport à la partie de contact axiale (30), la partie de contact axiale (29) étant de préférence formée par le composant dur (26).

9. Système d'entraînement à broche selon l'une des revendications précédentes, **caractérisé en ce que** les nervures (28) ont une forme hélicoïdale par rapport à l'axe géométrique de la broche (11).

10. Système d'entraînement à broche selon l'une des revendications précédentes, **caractérisé en ce qu'**un premier mouvement axial relatif du tube extérieur (15) par rapport au tube intérieur (14), résultant d'un mouvement d'entraînement du système d'entraînement à broche (1) depuis la position rétractée vers la position déployée, provoque le déplacement radial, en particulier le pivotement, de la deuxième section annulaire axiale (22) depuis la position d'étanchéité à la position de retrait ; de préférence, la partie de contact axiale (29), lors du premier mouvement axial relatif, entre en contact avec la partie de déplacement axial (31) de telle sorte que les nervures de contact (32) dévient radialement la deuxième section annulaire axiale (22) et/ou les segments périphériques (25) ; de façon encore préférée, lors du premier mouvement axial relatif, la lèvre d'étanchéité (24) est soulevée de la partie d'appui (30) par la déviation de la deuxième section annulaire axiale (22) et/ou des segments périphériques (25) et est guidée le long des nervures de contact (32), en particulier à une distance radiale de celles-ci, au cours de la poursuite du premier mouvement axial relatif.

11. Système d'entraînement à broche selon l'une des revendications précédentes, **caractérisé en ce qu'**un deuxième mouvement relatif axial du tube extérieur (15) par rapport au tube intérieur (14), résultant d'un mouvement d'entraînement du système d'entraînement à broche (1) de la position sortie à la position rentrée, provoque un recul, en particulier un pivotement vers l'arrière, de la deuxième section annulaire axiale (22) de la position de retrait à la position d'étanchéité ; de préférence, lors du deuxième mouvement axial relatif, la partie de contact axiale (29) se désengage de la partie de déplacement axial (31) de telle sorte que la deuxième section annulaire axiale (22) et/ou les segments périphériques (25) sont chacun aptes à revenir élastiquement dans le sens radial ; de préférence, lors du deuxième mouvement axial relatif, la lèvre d'étanchéité (24) revient en contact avec la partie d'appui (30) par le retour élastique de la deuxième section annulaire axiale (22) et/ou des segments périphériques (25).

12. Système d'entraînement à broche selon l'une des revendications précédentes, **caractérisé en ce que** le dispositif d'étanchéité (20) est fixé de manière axiale et est solidaire en rotation sur le tube extérieur (15), en particulier par l'intermédiaire de la première section annulaire axiale (21), et **en ce que**, lors de l'exécution des mouvements d'entraînement, la deuxième section annulaire axiale (22) est déplaçable radialement vers l'extérieur, en particulier de manière pivotante, par rapport à la première section annulaire axiale (21), depuis la position d'étanchéité vers la position de retrait, ou **en ce que** le dispositif d'étanchéité (20) est fixé de manière axiale et en rotation sur le tube intérieur (14), en particulier par l'intermédiaire de la première section annulaire axiale (21), et **en ce que**, lors de l'exécution des mouvements d'entraînement, la deuxième section annulaire axiale (22) est déplaçable radialement vers l'intérieur, en particulier de manière pivotante, par rapport à la première section annulaire axiale (21) depuis la position d'étanchéité à la position de soulèvement ; de préférence, la fixation axiale et la fixation en rotation sont assurées par une liaison par adhérence, en particulier par collage ou injection, et/ou par une liaison axiale par complémentarité de forme, en particulier par encliquetage.

13. Système d'entraînement à broche selon l'une des revendications précédentes, **caractérisé en ce que** le tube intérieur (14) est relié à la partie d'entraînement (8) côté écrou de broche et le tube extérieur (15) est relié à la partie d'entraînement (5) côté broche.

14. Système d'entraînement à broche selon l'une des revendications précédentes, **caractérisé en ce qu'**un dispositif anti-rotation est prévu entre le tube intérieur (14) et le tube extérieur (15), de préférence **en ce que** le dispositif anti-rotation est formé par un tube de torsion (17) solidaire en rotation de l'un des tubes, en particulier du tube extérieur (15), et est fixe axialement par rapport à la broche (4a), et un tube (18) d'écrou de broche, solidaire en rotation de l'autre tube, en particulier le tube intérieur (14), et qui est solidaire axialement de l'écrou de broche (4b), qui sont en prise l'un avec l'autre par complémentarité de formes, ou **en ce que** le tube intérieur (14) et le tube extérieur (15) sont eux-mêmes en prise l'un avec l'autre par complémentarité de formes.

15. Système d'entraînement à broche selon l'une des revendications précédentes, **caractérisé en ce que** la partie d'entraînement (5) côté broche comprend une unité d'entraînement (6) ayant un moteur d'entraînement (7) en aval duquel est agencée la broche (4a), et l'unité d'entraînement (6) et le mécanisme (4) à engrènement broche-écrou de broche sont agencés l'un derrière l'autre le long de l'axe géométrique de la broche (11), et/ou **en ce qu'**au moins un ressort hélicoïdal (16) est agencé à l'intérieur du tube intérieur (14) coaxialement à l'axe géométrique de la broche (11), qui précontraint les deux parties d'entraînement (5, 8) l'une contre l'autre, de préférence **en ce qu'**un tube de guidage de ressort s'étend à l'intérieur dudit au moins un ressort hélicoïdal (16) et est fixé à l'une de ses extrémités à la partie d'entraînement (5) côté broche, de façon encore préférée, **en ce que** le tube de guidage de ressort est formé par le tube de torsion (17).

16. Système d'entraînement à broche selon l'une des revendications précédentes, **caractérisé en ce que** le boîtier (13) de système d'entraînement à broche entoure radialement le mécanisme (4) à engrènement broche-écrou de broche, le moteur d'entraînement (7), le tube de torsion (17), le tube (18) d'écrou de broche et/ou ledit au moins un ressort hélicoïdal (16), en particulier sur toute son étendue axiale.
